# EUROPEAN PATENT APPLICATION

(11) **EP 4 851 744 A1**
(43) Date of publication of application: **09.12.2026**
(21) Application number: 26178147.0
(22) Date of filing: 12.05.2026
(51) Int. Cl.: G05D 1/648, A01B 69/04, G01C 21/20, G05D 1/246, G05D 1/248, G05D 1/622, G05D 105/15, G05D 107/20, G05D 109/10

(54) **ROUTE PLANNING FOR AN AGRICULTURAL VEHICLE**

(30) Priority: 04.06.2025 GB 202508747
(71) Applicant: AGCO International GmbH, 8212 Neuhausen am Rheinfall (CH)
(72) Inventor: Lausdahl, Kenneth, DK8900 Randers (DK); Bech, Søren, DK8900 Randers (DK); Zhou, Kun, 8930 Randers (DK); Nilsson, Rene, DK8900 Randers (DK)
(74) Representative: AGCO Intellectual Property Department

(57) **Abstract**

A guidance control system for generating a recommended route for an agricultural vehicle within a predetermined region. The guidance control system further tracks adherence of the agricultural vehicle to the recommended route and/or controlling the vehicle to follow the recommended route. The recommended route is generated responsive to an orientation of proposed waylines, themselves generated responsive to the identification of obstacles within a predetermined region.

## Description

### CROSS-REFERENCE TO RELATED APPLICATIONS

### FIELD

Embodiments of the present disclosure relate to agricultural vehicles, and in particular to route planning for agricultural vehicles.

### BACKGROUND

Obstacle handling in agricultural regions (e.g., fields) is a known challenge which requires trade-offs between skipped areas (areas not farmed), areas with wheel traffic and worked areas (e.g. the areas planted with a desired crop). Laying out waylines on even small and simply shaped fields with a limited number of obstacles is a challenge, and in particular, comprehending the consequences of the chosen direction and initial wayline placement is difficult to appreciate. If the field contains many obstacles and/or far apart obstacles, it can be even harder to determine a pattern for waylines and judge the overall quality of the planned route.

### BRIEF SUMMARY

According to examples in accordance with this disclosure, there is provided a computer-implemented method for generating a recommended route for an agricultural vehicle within a predetermined region bound by a boundary.

The computer-implemented method comprises: obtaining, by a guidance control system, boundary information defining the predetermined region; obtaining, by the guidance control system, geospatial information describing physical characteristics of the predetermined region; identifying, by the guidance control system, a plurality of obstacles in the predetermined region by processing the geospatial information; determining, by the guidance control system, an orientation of proposed waylines for the agricultural vehicle within the predetermined region by processing the identified plurality of obstacles; generating, by the guidance control system, a recommended route for movement of the agricultural vehicle within the predetermined region responsive to the orientation of proposed waylines and the boundary information; and during a subsequent performance of an agricultural process by the agricultural vehicle within the region: monitoring, using a position monitoring device, the position of the agricultural vehicle with respect to the recommended route; and responsive to a deviation of the monitored position of the agricultural vehicle from the recommended route, updating, by the guidance control system, the recommended route.

In this way, a recommended route for an agricultural vehicle in a region can be generated which takes into account obstacles present in the region. More specifically, the presence of obstacles in the region is used to determine an orientation for potential waylines which advantageously avoid the obstacles while minimizing trade-offs, for example, minimizing skipped areas. In other words, it has been realized that the orientation of waylines in a recommended route is a vitally important aspect for dictating the quality of the route when multiple obstacles are present in a region, and thus a method is provided which uses identified obstacles to first determine a beneficial orientation of waylines in the region before generating the entire recommended route for the vehicle in the region.

In some examples, determining an orientation of proposed waylines comprises: determining a location of at least one reference point for each identified obstacle; permuting the determined reference points into a plurality of unique pairs; determining straight lines between the reference points of the plurality of unique pairs respectively; and determining the orientation of proposed waylines responsive to the determined straight lines. This provides a particularly effective method of assessing how various different candidate orientations of potential waylines will interact with the identified obstacles in order to facilitate a selection of one proposed orientation.

In some examples, determining the orientation of proposed waylines responsive to the determined straight lines comprises: determining which of the determined straight lines intersects with the most reference points to identify a primary straight line; and determining the orientation of proposed waylines responsive to an orientation of the primary straight line. This facilitates an efficient selection of a single straight line from all the candidate straight lines, the orientation of which can be used to determine an optimal orientation of proposed waylines.

In some examples, the orientation of proposed waylines is perpendicular to the orientation of the primary straight line. In this way, the waylines will naturally be orientated in such a way as to pass through the gaps between a significant subset of the identified obstacles.

In some examples, the method further comprises filtering the determined straight lines responsive to a predetermined requirement. This facilitates the method being made more efficient as one or more straight lines can be ignored without having to determine how many reference points they intersect with.

In some examples, the predetermined requirement comprises at least one of: a length of the straight line represents a distance in the predetermined region less than a predetermined distance; and a length of the straight line represents a travel time of the agricultural vehicle along said straight line less than a predetermined time. Essentially, straight lines over a certain length are ignored as these represent a gap between obstacles large enough to never pose a problem to an agricultural vehicle.

In some examples, identifying a plurality of obstacles comprises classifying each obstacle as small or large, and wherein one reference point is determined for each small obstacle and a plurality of reference points are determined for each large obstacle. In this way, the obstacles can be simplified but in a way which does not ignore their size.

In some examples, determining a plurality of reference points for each large obstacle comprises: generating a bounding box which encloses the large obstacle; and determining the plurality of reference points responsive to where the generated bounding box intersects with an outline of the large obstacle. This provides a particularly effective way of generating reference points for a large obstacle which efficiently represents its furthest extent.

In some examples, an obstacle comprises at least one of: a utility pole; a wind turbine; a tree; a building; a road; a ditch; a fence; a stream; a drain cover; a body of water; a seasonal wet spot; crops; and a forest. Each of these are useful obstacles to take into account when planning a route for an agricultural vehicle.

In some examples, the method further comprises obtaining, by the guidance control system, vehicle information, wherein: the vehicle information identifies a working width of the agricultural vehicle; and wherein determining an orientation of proposed waylines is responsive to the working width of the agricultural vehicle. The working width of the agricultural vehicle is useful information to consider when planning an orientation of waylines for the agricultural vehicle, e.g., to ensure that the agricultural vehicle can fit between identified obstacles.

In some examples, the geospatial information comprises at least one of: optical satellite imagery of the predetermined region; near infrared satellite imagery of the predetermined region; a structure map of the predetermined region; shuttle radar topography mission data of the predetermined region; and obstacle data collected during a previous agricultural operation in the predetermined region. These are all effective sources of physical characteristics of a region, allowing efficient and reliable identification of obstacles.

In some examples, processing the geospatial information comprises performing feature analysis of the geospatial information. Feature analysis provides an effective and efficient way to identify obstacles from geospatial information.

In some examples, the method further comprises controlling an output user interface to provide a visual representation of the recommended route. This provides an operator of the agricultural vehicle with information on the recommended route. It will be appreciated that, if the recommended route is updated during the agricultural process, then the visual representation of the recommended route may be updated accordingly. This provides a human-machine interface that aids a human to perform a more effective agricultural process within the predetermined region.

In some examples, the position monitoring device is configured to define a position of the agricultural vehicle within a predefined co-ordinate system; and the recommended route defines a recommended path for the agricultural vehicle within the predefined co-ordinate system. This facilitates effective interaction between the position monitoring device and the recommended route.

There is also provided a method for moving an agricultural vehicle within a predetermined region bound by a boundary, the method comprising: obtaining, by a guidance control system, boundary information defining the predetermined region; obtaining, by the guidance control system, geospatial information describing physical characteristics of the predetermined region; identifying, by the guidance control system, a plurality of obstacles in the predetermined region by processing the geospatial information; determining, by the guidance control system, an orientation of proposed waylines for the agricultural vehicle within the predetermined region by processing the identified plurality of obstacles; generating, by the guidance control system, a recommended route for movement of the agricultural vehicle within the predetermined region responsive to the direction for proposed waylines and the boundary information; and during a subsequent performance of an agricultural process by the agricultural vehicle within the region, controlling the travel direction of the agricultural vehicle to follow the recommended route for the agricultural vehicle.

In some examples, the act of controlling the direction of the agricultural vehicle is performed automatically. Alternatively, the act of controlling the direction of the agricultural vehicle may be performed by an operator or user of the agricultural vehicle, i.e., controlled manually.

The method may further comprise restricting or preventing the performance of an agricultural process by the agricultural vehicle until after the recommended route is available.

There is also provided an agricultural vehicle, comprising: a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain geospatial information describing physical characteristics of the predetermined region; identify a plurality of obstacles in the predetermined region by processing the geospatial information; determine an orientation of proposed waylines for the agricultural vehicle within the predetermined region by processing the identified plurality of obstacles; generate a recommended route for movement of the agricultural vehicle within the predetermined region responsive to the orientation of proposed waylines and the boundary information; and during a subsequent performance of an agricultural process by the agricultural vehicle within the region: monitor, using a position monitoring device, the position of the agricultural vehicle with respect to the recommended route; and responsive to a deviation of the monitored position of the agricultural vehicle from the recommended route, update the recommended route. The position monitoring device may be part of the guidance control system, or it may be separate but (wirelessly/wiredly) connected to the guidance control system (and thus the instructions would cause the position monitoring device to monitor the position of the agricultural vehicle).

The guidance control system may be adapted to perform the acts of any herein proposed method, and vice versa.

In some examples, the agricultural vehicle further comprises an output user interface and wherein at least one non-transitory computer-readable storage medium of the guidance control system further comprises instructions that, when executed by the at least one processor, cause the guidance control system to provide, on the output user interface, a visual representation of the recommended route.

There is also provided an agricultural vehicle comprising a guidance control system configured to control one or more operations of the agricultural vehicle and comprising: at least one processor; and at least one non-transitory computer-readable storage medium storing instructions thereon that, when executed by the at least one processor, cause the guidance control system to: obtain boundary information defining the predetermined region; obtain geospatial information describing physical characteristics of the predetermined region; identify a plurality of obstacles in the predetermined region by processing the geospatial information; determine an orientation of proposed waylines for the agricultural vehicle within the predetermined region by processing the identified plurality of obstacles; generate a recommended route for movement of the agricultural vehicle within the predetermined region responsive to the orientation of proposed waylines and the boundary information; and during a subsequent performance of an agricultural process by the agricultural vehicle within the region, control the travel direction of the agricultural vehicle to follow the recommended route for the agricultural vehicle.

### BRIEF DESCRIPTION OF THE DRAWINGS

One or more embodiments of the disclosure will now be described, by way of example only, with reference to the accompanying drawings, in which:
FIG. 1 is a flowchart illustrating a proposed method;
FIG. 2 illustrates a view of a predetermined region with a boundary;
FIGS. 3A and 3B illustrate examples of determining reference points for small and large obstacles respectively;
FIG. 4 illustrates an example of how the width of an agricultural vehicle may fit between obstacles at an angle;
FIG. 5 illustrates an example of how straight lines can be determined from reference points;
FIG. 6 is a flowchart illustrating a proposed method of determining an orientation of proposed waylines;
FIG. 7 illustrates a system comprising a guidance control system as herein proposed; and
FIG. 8 illustrates an agricultural vehicle comprising a guidance control system as herein proposed.

### DETAILED DESCRIPTION

Embodiments of the disclosure will be described with reference to the Figures.

It should be understood that the detailed description and specific examples, while indicating exemplary embodiments of the apparatus, systems and methods, are intended for purposes of illustration only and are not intended to limit the scope of the present disclosure. These and other features, aspects, and advantages of the apparatus, systems and methods of the present disclosure will become better understood from the following description, appended claims, and accompanying drawings. It should be understood that the Figures are merely schematic and are not drawn to scale. It should also be understood that the same reference numerals are used throughout the Figures to indicate the same or similar parts.

This disclosure relates to a mechanism for generating a recommended route for an agricultural vehicle in a predetermined region. The mechanism further includes tracking adherence of the agricultural vehicle to the recommended route and/or controlling the vehicle to follow the recommended route. The recommended route is generated responsive to an orientation of proposed waylines which are themselves generated responsive to identified obstacles.

The present disclosure recognizes that it would be desirable if the route taken by an agricultural vehicle (when performing an agricultural process or procedure within the predetermined region) takes account of the obstacles within the predetermined region rather than merely selecting either north, east or a field side as a wayline direction.

The present disclosure proposes to plan a recommended route for the agricultural vehicle using identified obstacle(s) in the predetermined region to determine an optimum wayline orientation in the planning of the recommended route.

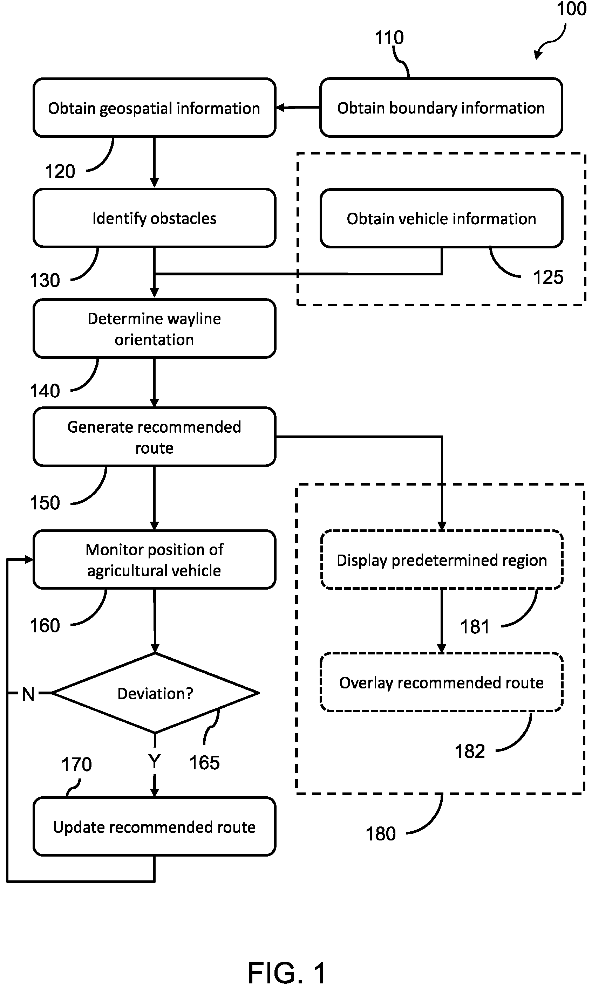

FIG. 1 is a flowchart illustrating a proposed computer-implemented method 100 that is executed, e.g., by a processing system, to perform the proposed approach. In particular, the method 100 is designed for generating a recommended route for an agricultural vehicle to perform an agricultural process within a predetermined region bound by a boundary.

The computer-implemented method 100 comprises an act 110 of obtaining, by a guidance control system, boundary information. The boundary information defines the predetermined region, e.g., comprises information indicating the boundary of the predetermined region.

The boundary information can, for instance, be retrieved from a memory or database. More particularly, in some embodiments, the act of obtaining the boundary information can comprise retrieving the boundary information from a database storing a plurality of instances of boundary information for different predetermined regions. In this approach, the boundary information corresponding to the predetermined region is selected. Thus, it is not necessary that the guidance control system perform the generation of the boundary information, rather the boundary information may be extracted from a database. Thus, the boundary information may be predefined or precalculated, in order to improve a speed and/or efficiency of generating the recommended route.

Alternatively, the boundary information can be generated by the guidance control system by processing satellite imagery of the predetermined region. This can thus allow boundary information to still be obtained even in situations where it is not retrievable from a database.

The computer-implemented method 100 also comprises an act 120 of obtaining, by the guidance control system, geospatial information describing physical characteristics of the predetermined region. For instance, the geospatial information can be understood as describing the physical geography, topography, land use, infrastructure, hydrology and/or vegetation of the predetermined region. All these are relevant physical characteristics of the predetermined region for obstacle identification.

For example, in this embodiment, the geospatial information comprises at least one of: optical satellite imagery of the predetermined region; near infrared satellite imagery of the predetermined region; a structure map of the predetermined region; shuttle radar topography mission data of the predetermined region; and obstacle data collected during a previous agricultural operation in the predetermined region. These are all effective sources of physical characteristics of a region, allowing efficient and reliable identification and classification of obstacles. In other embodiments, however, the geospatial information can comprise any suitable type of geospatial information from which obstacles can be identified (and optionally classified as small or large). In some embodiments, the geospatial information specifically comprises at least two different types of geospatial information. Using at least two types of geospatial information increases the reliability of both identifying and classifying obstacles. In other embodiments, however, such as this one, the geospatial information can comprise just one type of geospatial information. Obstacle data collected during a previous agricultural operation can be understood as, for example, data indicating manually recorded obstacles in the predetermined region or visual/LiDAR data captured during a previous agricultural operation from which obstacles can be identified.

The computer-implemented method 100 also comprises an act 130 of identifying, by the guidance control system, a plurality of obstacles in the predetermined region by processing the geospatial information. In other words, act 130 can be understood as analyzing the geospatial information to identify two or more obstacles in the predetermined region. As the skilled person would appreciate, dependent on the form of the geospatial information, this act can be performed in many different known ways, of which the skilled person would be aware.

In this embodiment, an obstacle comprises at least one of: a utility pole; a wind turbine; a tree; a building; a road; a ditch; a fence; a stream; a drain cover; a body of water; a seasonal wet spot; crops; and a forest. Each of these are useful obstacles to take into account when planning a route for an agricultural vehicle though in other embodiments, an obstacle can comprise any other form of obstacle which may interfere with the operation/movement of an agricultural vehicle. A seasonal wet spot can be understood as a portion of an agricultural region which is only an obstacle (e.g., thick mud due to excessive moisture) in certain seasonal weather conditions (e.g., after heavy rain).

In this embodiment, processing the geospatial information in act 130 comprises performing feature analysis of the geospatial information. Feature analysis provides an effective and efficient way to identify obstacles from geospatial information. Feature analysis is particularly effective when used on a structure map of the predetermined region. It should be noted, however, that in other embodiments, the geospatial information can be processed in any suitable way and need not include performing feature analysis.

In some embodiments, the act of processing the geospatial information to identify the obstacles can comprise processing the geospatial information using one or more machine-learning algorithms. This provides high quality and reliable identification of the obstacle(s) within the predetermined region, however, in other embodiments, any suitable algorithm can be used to process the geospatial information (or no algorithm at all, e.g., using a neural network instead).

For instance, one or more machine-learning algorithms may be appropriately configured and/or trained for identifying obstacles by processing geospatial information. Any suitable machine-learning algorithm may be used in different embodiments for the present disclosure. Suitable machine-learning algorithms include (artificial) neural networks, support vector machines (SVMs), Naïve Bayesian models and decision tree algorithms, although other appropriate examples will be apparent to the skilled person.

There are a number of well-established approaches for training a machine-learning algorithm. One widely used learning approach is known as a supervised learning approach, which makes use of a large database of known input and output data. In such techniques, the machine-learning algorithm is modified until an error between predicted output data, obtained by processing the input data with the machine-learning algorithm, and the actual (known) output data is close to zero, i.e., until the predicted output data and the known output data converge. The value of this error is often defined by a cost function, which can be selected or defined by an appropriately skilled individual. The precise mechanism for modifying the machine-learning algorithm depends upon the type of model. Example approaches for use with a neural network include gradient descent, backpropagation algorithms and so on.

It is not essential that the machine learning algorithm(s) be trained by the guidance control system. Rather, the machine-learning algorithm(s) may be trained in advance of their usage (i.e., exploitation for performing inference) by the guidance control system. More specifically, the machine-learning algorithm(s) may be trained by a dedicated training processing system, such as a cloud-based processing system.

Act 140 comprises determining, by the guidance control system, an orientation of proposed/potential waylines for the agricultural vehicle within the predetermined region by processing (i.e., based on / responsive to) the identified plurality of obstacles. In other words, by processing the identified plurality of obstacles in some way, an orientation (i.e., a direction, e.g., north, west, 82 degrees, etc.) of waylines to be included in (i.e., form part of) a recommended route is determined. That is, the identified obstacles are processed to determine a directional alignment (e.g., heading angle) of waylines to be incorporated into a recommended route.

The computer-implemented method 100 also comprises an act 150 of generating (by the guidance control system) a recommended route for movement of the agricultural vehicle within the predetermined region by processing at least the boundary information and the determined orientation of proposed waylines. In other words, the recommended route (for the agricultural vehicle to perform an agricultural process) takes into account the boundary information (to ensure the route stays within the predetermined region) and includes waylines with the determined orientation. For instance, waylines with the determined orientation may be replicated with a set spacing between them until they fill the predetermined region, and the waylines then joined together using connecting segments (e.g., which smoothly connect the end of one wayline to the end of an adjacent wayline).

The recommended route may be defined with respect to a predetermined spatial co-ordinate system, such as a global or geographic co-ordinate system (e.g., longitude and latitude), a region/local co-ordinate system (e.g., a trilatered/triangulated position) or a relative co-ordinate system, such as one defined with respect to the boundary of the predetermined region.

In general, act 150 may comprise generating a recommended route with a target or aim of performing an agricultural process across the largest possible area of the predetermined region while taking the identified obstacles into account.

Optionally, the computer-implemented method 100 can also comprise act 125 of obtaining, by the guidance control system, vehicle information, the vehicle information identifying a working width of the agricultural vehicle. As the skilled person would know, a working width of an agricultural vehicle means the effective transverse span across which the vehicle or its attached implement performs its intended agricultural function in a single pass, such as cutting, spraying, seeding, or harvesting. Act 140 of determining an orientation of proposed waylines may thus be further responsive to the working width of the agricultural vehicle. The working width of the agricultural vehicle is useful information to consider when planning an orientation of waylines for the agricultural vehicle, e.g., to ensure that said vehicle can fit between identified obstacles.

The computer-implemented method 100 also comprises performing further acts 160 and 170, which are only performed during a subsequent (to act 150) performance of an agricultural process.

Act 160 comprises monitoring, using a position monitoring device, the position of the agricultural vehicle with respect to the recommended route. Act 160 may be performed by the guidance control system communicating or otherwise interacting with the position monitoring device to monitor the position of the agricultural vehicle.

Approaches for monitoring or tracking the position of an agricultural vehicle are widely known in the art, and typically track a positioning element of the agricultural vehicle. For instance, the positioning element may comprise a satellite navigation system for tracking the position of the positioning element. As another example, the positioning element may comprise an antenna that outputs one or more signals that are triangulated/trilaterated using an (external) triangulation/trilateration system.

The monitored/tracked position of the agricultural vehicle may be defined in the same spatial co-ordinate system as the recommended route. Where appropriate or required, this may comprise perform a spatial transformation of the monitored/tracked position and/or the recommended route so that both sets of data lie in a same spatial co-ordinate system, i.e., share a same spatial co-ordinate system. Approaches for performing such as technique are well known in the art, particularly as the relationship between different spatial co-ordinate systems can be readily defined.

Put another way, the position monitoring device may be configured to define a position of the agricultural vehicle within a predefined co-ordinate system. The recommended route defines a recommended path for the agricultural vehicle within the predefined co-ordinate system.

Act 170 comprises, responsive to a deviation of the monitored position of the agricultural vehicle from the recommended route, updating, by the guidance control system, the recommended route.

Thus, act 170 may comprise a sub-act 165 of determining whether or not that there is a deviation from the monitored position of the agricultural vehicle from the recommended route. Sub-act 165 may be performed by the guidance control system and/or the position monitoring system.

One approach to performing act 165 is to determine a shortest distance (e.g., in the shared spatial co-ordinate system) between the monitored position and the recommended route. Responsive to the determined distance breaching/exceeding a predetermined threshold (e.g., representing a spatial distance of no less than 1 m), then act 165 may determine that there is a deviation from the recommended route. Responsive to the determined distance failing to breach/exceed a predetermined threshold (e.g., representing a spatial distance of no less than 1 m), then act 165 may determine that there is no deviation from the recommended route.

Responsive to a positive determination in sub-act 165 (i.e., when a deviation is detected), the method 100 moves to act 170 of updating the recommended route. Act 170 may be performed, for instance, by effectively repeating the procedure performed in act 150 - but with a modified version of the boundary of the predetermined region. In particular, the boundary may be moved such that the predetermined region no longer contains any part of the region that has undergone the agricultural procedure.

In some examples, the recommended route comprises one or more location markers each identifying a point of the recommended route with respect to the predetermined co-ordinate system. This provides a mechanism for coherently and reliably defining the recommended route using a relatively small amount of data.

Optionally, the method 100 further comprises an act 180 of controlling an output user interface to provide a visual representation of the recommended route. Approaches for controlling an output user interface (e.g., a display or screen) to provide a visual representation of a data element will be readily apparent to the skilled person.

As a working example, act 180 may comprise a sub-act 181 of controlling the output user interface to provide a visual representation of the predetermined region. This may be performed, for example, by using the boundary information to define the shape of the predetermined region. As an alternative example, this may be performed by using an aerial photograph (e.g., a satellite image) of the predetermined region.

In this working example, act 180 may further comprise a sub-act 182 of overlaying a visual representation of the recommended route, over the visual representation of the predetermined region. The visual representation of the recommended route may take the form of one or more lines representing the recommended route.

Sub-act 182 can be trivially performed if the spatial relationship between the predetermined region and the recommended route is known, e.g., they are defined in a same spatial co-ordinate system. In particular, the global position of an area represented in an aerial photograph, such as a satellite image, is known or determinable when the aerial photograph is taken. If the recommended route can be defined using similar geographic position information, then a visual representation of the recommended route can be trivially overlaid upon the visual representation of the predetermined region.

Although not illustrated in FIG. 1, the method 100 may comprise (in addition or as an alternative to acts 160-170), during an agricultural procedure, controlling (using a vehicle control device) a movement of the agricultural vehicle to follow the recommended route. This may be performed by monitoring the position of the agricultural vehicle (e.g., using any previously described approach) and controlling the steering of the agricultural vehicle such that the monitored position follows the recommended route. In some embodiments, the travel speed of the agricultural vehicle can also be controlled during performance of the agricultural process. For instance, the travel speed of the agricultural vehicle can be controlled to slow down when approaching a potentially dangerous area. In some embodiments, the act of controlling the direction (and potentially also travel speed) of the agricultural vehicle can be performed automatically.

Approaches for automated control of an agricultural vehicle to follow a recommended route are known in the art, e.g., as suggested by (inter alia) Pedersen, Søren Marcus, et al. "Agricultural robots-system analysis and economic feasibility." Precision agriculture 7 (2006): 295-308 or O'Connor, Michael, et al. "Automatic steering of farm vehicles using GPS." Proceedings of the Third International Conference on Precision Agriculture. Madison, WI, USA: American Society of Agronomy, Crop Science Society of America, Soil Science Society of America, 1996.

Alternatively, controlling the movement of the agricultural vehicle may be performed or controlled by a human operator of the agricultural vehicle, e.g., performing a manual control of the travel direction(s) (and speed) of the agricultural vehicle using any known vehicle control mechanism (e.g., a steering wheel or the like). In such approaches, the method 100 may thus comprise controlling an output user interface to provide a visual representation of the recommended route (example approaches for which have been previously described) and controlling, by the human operator, the travel direction of the agricultural vehicle responsive to the recommended route.

In other words, in simple terms, the present disclosure can be understood as proposing a farming/agricultural machine which can automatically provide wayline direction candidates not only as north, east, or boundary segments, but based on the evaluation of obstacles in the field in order to provide a route which results in better and smoother obstacle handling while driving the machine.

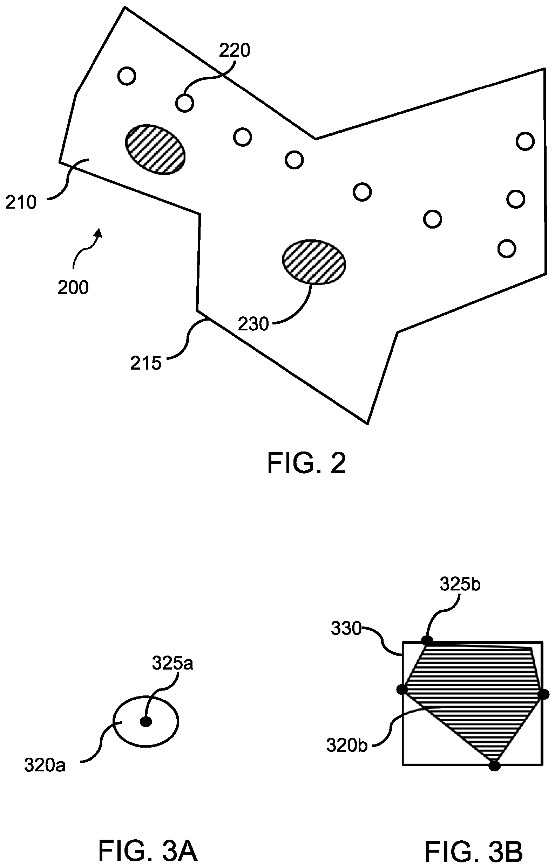

FIG. 2 illustrates a view of an agricultural environment 200 in which proposed embodiments may be implemented, for the purposes of improved contextual understanding. Within the environment 200, a predetermined region 210 is bound or delineated by a boundary 215. The predetermined region may, for instance, represent a field of a farm.

In any agricultural environment, there may be one or more obstacles (otherwise referred to as hazards or objects) in the predetermined region 210. In this predetermined region, there are two types of obstacles, 220 and 230. In this example, there are multiple small obstacles 220 (the small hollow circles representing small power poles) and two large obstacles 230 (the large striped ovals representing ponds).

FIGS. 3A and 3B illustrate examples of determining reference points for small (e.g., the small power poles 220) and large obstacles (e.g., the large ponds 230) respectively.

As can be seen, for small obstacles 320a such as small power poles or small wells, a reference point 325a can simply be provided in their center (or on their circumference). However, for larger obstacles 320b such as ponds or burial mounds, a bounding box 330 can be generated around the obstacle. The bounding box 330 should be the smallest bounding box which completely surrounds the obstacle, e.g., a minimum-area enclosing rectangle or oriented bounding box. Reference points 325b (the small black dots) are then determined to be present wherever the bounding box 330 and the large obstacle 320b touch/intersect.

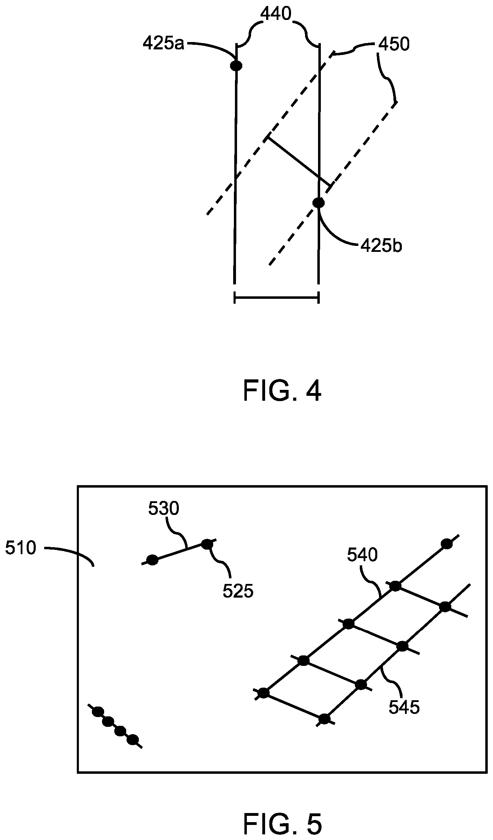

FIG. 4 illustrates an example of how the width of an agricultural vehicle may fit between obstacles, 425a and 425b, at an angle. As can be seen, the width of an agricultural vehicle, represented by straight lines 440 is too wide to pass between the two obstacles, 425a and 425b, when orientated vertically (from the point of view of Fig. 4). However, when rotated clockwise, the vehicle (with the same width, now represented by dashed straight lines 450) can now pass between the obstacles. This principle can thus be leveraged when planning routes through a predetermined region with multiple obstacles.

FIG. 5 illustrates an example of how straight lines can be determined from reference points. As can be seen, in this example predetermined region 510, there are multiple reference points 525 of obstacles present (represented by the small back dots). Straight lines 530 have accordingly been determined between neighboring reference points 525 (i.e., reference points within a certain distance of one another). As some of the reference points are themselves placed along a straight line, the straight lines between said reference points essentially combine into one single long straight line which passes through multiple reference points. As will be described later, these determined straight lines (and more specifically their orientation) can be used to determine the orientation of proposed waylines and thus influence the generation of the recommended route.

Line 540 passes through five reference points, which is the most of any straight line in the predetermined region 510, and thus it would be identified as the primary straight line (this will be explained in more detail later). It should be noted that line 545 has the same orientation as line 540 and in some embodiments, lines 540 and 545 may thus essentially be combined (with their number of intersections being summed together).

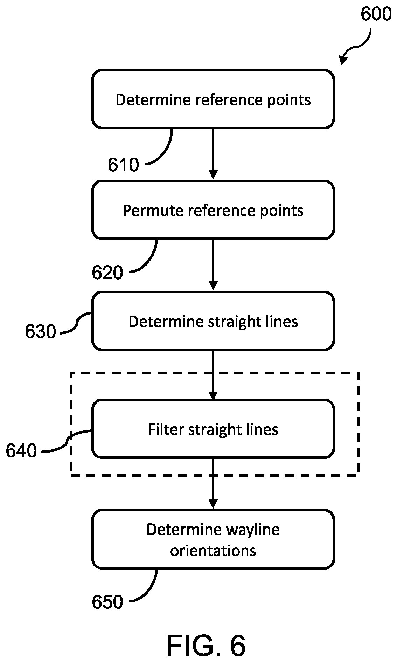

FIG. 6 is a flowchart illustrating a proposed method 600 of determining an orientation of proposed waylines. In other words, in some embodiments of the disclosure, method 600 replaces act 140 (i.e., is a form of act 140) of method 100.

Act 610 comprises determining a location of at least one reference point for each identified obstacle. In other words, for each obstacle identified within the predetermined region, at least one reference point is generated and located to represent said obstacle (e.g., within a representation / map of the predetermined region). An example of this is shown in FIGS. 3A and 3B. For instance, one or more reference points may be located at the center of an obstacle or along its edge.

In this embodiment, after identification of the plurality of obstacles (e.g., in act 130), the obstacles are also classified as small or large, and in act 610, one reference point is determined for each small obstacle and a plurality of reference points are determined for each large obstacle (as shown in FIGS. 3A and 3B). Specifically, in this embodiment, determining a plurality of reference points for each large obstacle comprises (as shown in FIG. 3B) generating a bounding box which encloses the large obstacle and determining the plurality of reference points responsive to where the generated bounding box intersects with an outline of the large obstacle. The bounding box should be the smallest bounding box which completely surrounds the obstacle, e.g., a minimum-area enclosing rectangle or oriented bounding box. Reference points are then determined to be present wherever the bounding box and the large obstacle touch/intersect. In other embodiments, however, the reference points for a large obstacle can be determined in any suitable way, as would be understood by the skilled person.

Act 620 comprises permuting the determined reference points into a plurality of unique pairs. In other words, act 620 involves generating all possible two-element combinations from the set of reference points such that each pair is distinct, effectively establishing a set of unique point-to-point relationships.

Act 630 then comprises determining straight lines between the reference points of the plurality of unique pairs respectively. In other words, for each pair of reference points, one straight line between the reference points of said pair is determined. To be clear, the straight lines between the reference points are within a representation / map of the predetermined region.

An optional act 640 comprises filtering the determined straight lines responsive to (i.e., based on) a predetermined requirement. In other words, determined straight lines which do not fulfil a predetermined requirement are essentially discarded / ignored. In this embodiment, the predetermined requirement comprises at least one of: a length of the straight line represents a distance in the predetermined region less than a predetermined distance; and a length of the straight line represents a travel time of the agricultural vehicle (using a predetermined speed of the agricultural vehicle, e.g., an average speed or a maximum speed) along said straight line less than a predetermined time. Essentially, straight lines over a certain length are ignored as these represent a gap between obstacles large enough to never pose a problem to an agricultural vehicle though, in other embodiments, the predetermined requirement can be any suitable predetermined requirement according to a user's needs.

Act 650 comprises determining the orientation of proposed waylines responsive to (i.e., based on) the determined straight lines. It should be noted that if the straight lines have been optionally filtered in act 640 then the orientation of proposed waylines in act 650 will be responsive to the determined filtered straight lines.

In this embodiment, act 650 comprises determining which of the determined straight lines intersects with (i.e., passes through) the most reference points (within a representation / map of the predetermined region). The line which intersects with the most reference points is then identified as a primary straight line. For instance, in FIG. 5, line 540 would be identified as the primary line as it passes through five reference points, which is the most of any straight line. It should also be noted that in some embodiments, lines with the same orientation can be considered together and the number of intersections with reference points for each line with the same orientation summed. For instance, looking at FIG. 5, lines 540 and 545 can be considered together (e.g., as a group), and their number of intersections with reference points summed (5+4 = 9) to thereby identify a primary line orientation with the most number of reference point intersections. Act 650 then further comprises determining the orientation of proposed waylines responsive to an orientation of the primary straight line. The skilled person would be aware of the many ways in which this could be done but in this embodiment, the orientation of proposed waylines is the orientation of the primary line. In other embodiments, the orientation of proposed waylines is perpendicular to the orientation of the primary straight line. This orientation allows the waylines to pass through a substantial portion of the gaps between obstacles.

In a specific example of the disclosure, after reference points have been generated for each identified obstacle, all reference points are permuted into unique pairs (point combinations) and then filtered by a given policy.
$\left(p,p′\right) ∈ P if p \neq p ′ ;$ Unique points in pairs
$PP = permute \left(P\right) ;$ Set of permuted pairs
$\left(p,p′\right) ∈ PP if \left(p′,p\right) ∉ PP ;$ A pair is only in set if it is unique
$\left(p,p′\right) ∈ PP if policy \left(\left(p,p′\right)\right) ;$ Pairs are only in set if it satisfy a policy

Pairs of points P = p₁, p₂ are considered the same regardless of the ordering of p₁ and p₂ in P. The filtering policies could be one of the following: a static distance filter: only points within a specified distance are paired during permutation; an equipment travel time filter: only points which are within a given travel time of one another are paired (this is a naturally derived version of a static distance filter as speed and time can be converted to distance); and a row filter: only points within a predetermined number of rows of one another are paired (again, this is a naturally derived version of a static distance filter as a number of rows can be converted to distance given that a row has a fixed width).

The filtering policies allow for the specific example of the disclosure to scale as the basic problem which this solution is built upon is 3-SUM hard and introducing the additional search of all lines (through the permutation) which are not necessary makes the 3-SUM hard problem significantly worse for little to no gain.

Straight lines are then calculated between the point-pairs and it is checked whether another reference point has a linear relation with the line. It should be noted that if one of the points in the pair form a bounding box of a large obstacle (e.g., a polygon), then other points for the same bounding box are not considered (i.e., it is not checked whether they intersect with the straight line as they are not considered another obstacle). If a reference point is on a straight line, then the reference point will be stored as part of the line. This is one way to evaluate the points. However, another example way is to evaluate a slope (orientation) of a line and any intersections (with other reference points) that is created by each pair of points, since if lines share these aspects then they can be considered to have the same straight line going through them. It can then be counted how many have the same slope and intersections.

After all relevant reference points have been checked, then the slopes (orientations), intersections, and the count of pairs that have the same slope (orientation) and intersections are collected. If the slope and intersections are the same then the same straight line goes through them (i.e., the individual straight lines are combined). Lines with the same slope (orientation) can be merged (and the number of intersections with reference points summed), thus increasing the likelihood of the identification of a primary line with said slope/orientation (if the primary line is chosen according to which line has the most intersections with reference points).

Before the final evaluation of the straight lines, the lines can undergo an additional step where they are duplicated through a 90-degree rotation unless the working width of the agricultural vehicle/machine is known and could not fit between the reference points (after the 90-degree rotation). In this case, the line can be rotated to an angle such that the distance between the points (at said angle) is at least the working width (as shown in FIG. 4). If no such angle exists, then no additional line is made.

The final step in this specific example of the disclosure, is to utilize an evaluation technique to do the final evaluation of the straight lines in order to determine the best overall wayline direction. Naturally, the best candidate straight line is the line with the highest point count (i.e., the line (or group of lines with the same orientation) intersecting the most reference points). However, the top X number of lines (e.g., top 3, 5, or 10 lines) can also be included in a full analysis as other factors other than obstacle alignment will also play a role in determining the best overall wayline orientation for an agricultural operation. Once the best overall wayline orientation has been determined, this can be loaded into the machine's guidance system, e.g., to generate a recommended route based on the selected wayline orientation (for example, including waylines with said selected wayline orientation).

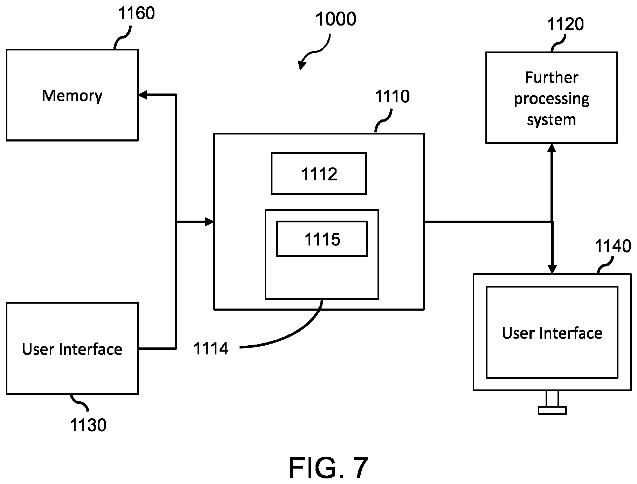

FIG. 7 illustrates an example of system 1000 in which embodiments may be employed.

The system comprises a guidance control system 1110, which is itself an embodiment of the present disclosure, a position monitoring device 1120, an (optional) input user interface 1130, and a (optional) output user interface 1140.

The guidance control system 1110 is configured to perform and/or co-ordinate the performance of any previously disclosed act that is identified as being performed by or using the guidance control system.

In particular examples, the guidance control system 1110 may perform the acts of: obtaining boundary information defining the predetermined region; obtaining geospatial information describing physical characteristics of the predetermined region; identifying a plurality of obstacles in the predetermined region by processing the geospatial information; determining an orientation of proposed waylines for the agricultural vehicle within the predetermined region by processing the identified plurality of obstacles; generating a recommended route for movement of the agricultural vehicle within the predetermined region responsive to the orientation of proposed waylines and the boundary information; and during a subsequent performance of an agricultural process by the agricultural vehicle within the region: monitoring, using a position monitoring device, the position of the agricultural vehicle with respect to the recommended route; and responsive to a deviation of the monitored position of the agricultural vehicle from the recommended route, updating the recommended route.

In some examples, the guidance control system 1110 may perform acts of: obtaining boundary information defining the predetermined region; obtaining geospatial information describing physical characteristics of the predetermined region; identifying a plurality of obstacles in the predetermined region by processing the geospatial information; determining an orientation of proposed waylines for the agricultural vehicle within the predetermined region by processing the identified plurality of obstacles; generating a recommended route for movement of the agricultural vehicle within the predetermined region responsive to the orientation of proposed waylines and the boundary information; and during a subsequent performance of an agricultural process by the agricultural vehicle within the region, controlling the travel direction of the agricultural vehicle to follow the recommended route for the agricultural vehicle.

More specifically, the guidance control system 1110 may comprise at least one processor 1112 and at least one non-transitory computer-readable storage medium 1114 storing instructions 1115 thereon that, when executed by the at least one processor, cause the guidance control system to perform any previously disclosed act that is identified as being performed by or using the guidance control system.

The skilled person would be readily capable of developing a guidance control system for carrying out any herein described method. Thus, each act of the flow chart may represent a different action performed by a guidance control system, and may be performed by a respective module of the guidance control system.

The position monitoring device 1120 is configured to monitor the position of an agricultural vehicle during the performance of an agricultural process. Approaches for monitoring the position of a vehicle are well known in the art, some of which have been previously described in detail. The function or operation of the position monitoring system may be controlled by and/or responsive to instructions/communications from the guidance control system.

The guidance control system 1110 and the position monitoring device 1120 are configured to communicate with one another over any wired/wireless medium, e.g., an ethernet cable, using any suitable or known communication protocol.

The input user interface 1130 may be adapted to receive one or more inputs from a user or operator. The input(s) may, for instance, be used to define one or more properties or parameters used in one or more of the herein disclosed methods.

The output user interface 1140 may be adapted to provide a visual representation of the predetermined region and/or the recommended route. In particular, the guidance control system 1110 may communicate with the output user interface (e.g., embodiable as a screen or display) to provide such a visual representation.

The system 1100 may further comprise a memory 1160 configured to store one or more instances of boundary information. The guidance control system may be configured to obtain one of the one or more instances of boundary information from the memory 1160. More particularly, the memory or database may store a plurality of instances of boundary information for different predetermined regions. In this approach, the boundary information corresponding to the predetermined region is selected from the database, i.e., by selecting the boundary information corresponding to the relevant predetermined region.

There is also provided an agricultural vehicle comprising any herein disclosed guidance control system 1110 and (where appropriate) the position monitoring system.

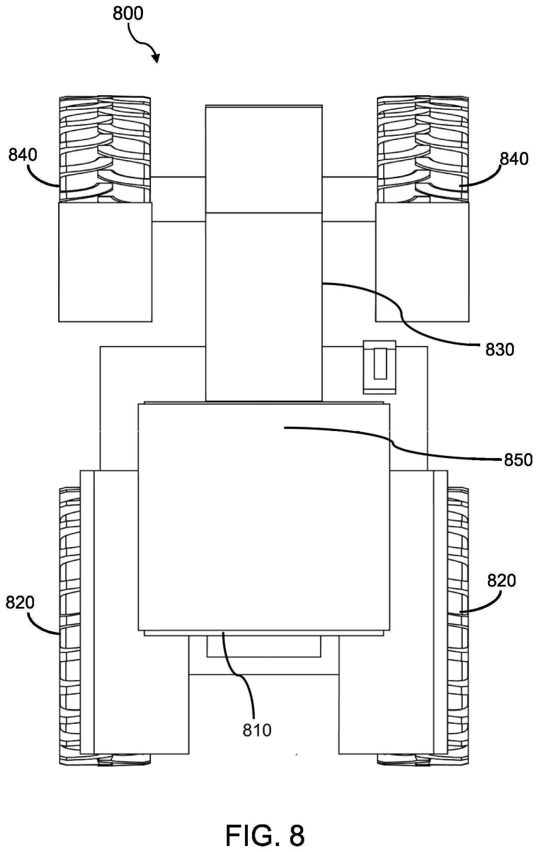

FIG. 8 illustrates an agricultural vehicle 800 comprising a guidance control system 850 as herein proposed.

For example, the agricultural vehicle 800 comprises a cabin 810; rear wheels 820; a hood 830; and front wheels 840. In this example, the guidance control system 850 (not shown) is situated in the cabin 810, but in other embodiments, the guidance control system 850 can be situated in any suitable place within the agricultural vehicle. In some embodiments, where appropriate, the agricultural vehicle 800 may further comprise a position monitoring system (as described above). For example, the position monitoring system may also be situated in the cabin 810.

The guidance control system 850 may comprise at least one processor (not shown); and at least one non-transitory computer-readable storage medium (not shown) storing instructions thereon that, when executed by the at least one processor, cause the guidance control system 850 to perform any herein-disclosed method.

In particular examples, the guidance control system 850 may perform the acts of: obtaining boundary information defining the predetermined region; obtaining geospatial information describing physical characteristics of the predetermined region; identifying a plurality of obstacles in the predetermined region by processing the geospatial information; determining an orientation of proposed waylines for the agricultural vehicle within the predetermined region by processing the identified plurality of obstacles; generating a recommended route for movement of the agricultural vehicle within the predetermined region responsive to the orientation of proposed waylines and the boundary information; and during a subsequent performance of an agricultural process by the agricultural vehicle within the region: monitoring, using a position monitoring device, the position of the agricultural vehicle with respect to the recommended route; and responsive to a deviation of the monitored position of the agricultural vehicle from the recommended route, updating the recommended route.

In some examples, the guidance control system 850 may perform acts of: obtaining boundary information defining the predetermined region; obtaining geospatial information describing physical characteristics of the predetermined region; identifying a plurality of obstacles in the predetermined region by processing the geospatial information; determining an orientation of proposed waylines for the agricultural vehicle within the predetermined region by processing the identified plurality of obstacles; generating a recommended route for movement of the agricultural vehicle within the predetermined region responsive to the orientation of proposed waylines and the boundary information; and during a subsequent performance of an agricultural process by the agricultural vehicle within the region, controlling the travel direction of the agricultural vehicle to follow the recommended route for the agricultural vehicle.

It will be understood that disclosed methods are preferably computer-implemented methods. As such, there is also proposed the concept of a computer program comprising code means for implementing any described method when said program is run on a guidance control system, such as a computer. Thus, different portions, lines or blocks of code of a computer program according to an embodiment may be executed by a guidance control system or computer to perform any herein described method.

A computer program may be stored on a computer-readable medium, itself an embodiment of the present disclosure. A "computer-readable medium" is any suitable mechanism or format that can store a program for later processing by a guidance control system. The computer readable medium can be, for example but not limited to, an electronic, magnetic, optical, electromagnetic, infrared, or semiconductor system, apparatus or device. The computer-readable medium is preferably non-transitory.

In some alternative implementations, the functions noted in the block diagram(s) or flow chart(s) may occur out of the order noted in the figures. For example, two blocks shown in succession may, in fact, be executed substantially concurrently, or the blocks may sometimes be executed in the reverse order, depending upon the functionality involved.

Variations to the disclosed embodiments can be understood and effected by those skilled in the art in practicing embodiments of the present disclosure, from a study of the drawings, the disclosure and the appended claims. In the claims, the word "comprising" does not exclude other elements or acts, and the indefinite article "a" or "an" does not exclude a plurality. A single processor or other unit may fulfill the functions of several items recited in the claims. The mere fact that certain measures are recited in mutually different dependent claims does not indicate that a combination of these measures cannot be used to advantage. If a computer program is discussed above, it may be stored/distributed on a suitable medium, such as an optical storage medium or a solid-state medium supplied together with or as part of other hardware, but may also be distributed in other forms, such as via the Internet or other wired or wireless telecommunication systems. If the term "adapted to" is used in the claims or description, it is noted the term "adapted to" is intended to be equivalent to the term "configured to". If the term "arrangement" is used in the claims or description, it is noted the term "arrangement" is intended to be equivalent to the term "system", and vice versa. Any reference signs in the claims should not be construed as limiting the scope.

All references cited herein are incorporated herein in their entireties. If there is a conflict between definitions herein and in an incorporated reference, the definition herein shall control.

## Claims

1. A computer-implemented method for generating a recommended route for an agricultural vehicle within a predetermined region bound by a boundary, the computer-implemented method comprising:
obtaining, by a guidance control system, boundary information defining the predetermined region;
obtaining, by the guidance control system, geospatial information describing physical characteristics of the predetermined region;
identifying, by the guidance control system, a plurality of obstacles in the predetermined region by processing the geospatial information;
determining, by the guidance control system, an orientation of proposed waylines for the agricultural vehicle within the predetermined region by processing the identified plurality of obstacles;
generating, by the guidance control system, a recommended route for movement of the agricultural vehicle within the predetermined region responsive to the orientation of proposed waylines and the boundary information; and
during a subsequent performance of an agricultural process by the agricultural vehicle within the region:
monitoring, using a position monitoring device, the position of the agricultural vehicle with respect to the recommended route; and
responsive to a deviation of the monitored position of the agricultural vehicle from the recommended route, updating, by the guidance control system, the recommended route.

2. The computer-implemented method of claim 1, wherein determining an orientation of proposed waylines comprises:
determining a location of least one reference point for each identified obstacle;
permuting the determined reference points into a plurality of unique pairs;
determining straight lines between the reference points of the plurality of unique pairs respectively; and
determining the orientation of proposed waylines responsive to the determined straight lines.

3. The computer-implemented method of claim 2, wherein determining the orientation of proposed waylines responsive to the determined straight lines comprises:
determining which of the determined straight lines intersects with the most reference points to identify a primary straight line; and
determining the orientation of proposed waylines responsive to an orientation of the primary straight line.

4. The computer-implemented method of claim 3, wherein the orientation of proposed waylines is perpendicular to the orientation of the primary straight line.

5. The computer-implemented method of any of claims 2 to 4, further comprising filtering the determined straight lines responsive to a predetermined requirement.

6. The computer-implemented method of claim 5, wherein the predetermined requirement comprises at least one of: a length of the straight line represents a distance in the predetermined region less than a predetermined distance; and a length of the straight line represents a travel time of the agricultural vehicle along said straight line less than a predetermined time.

7. The computer-implemented method of any one of claims 2 to 6, wherein identifying a plurality of obstacles comprises classifying each obstacle as small or large, and wherein one reference point is determined for each small obstacle and a plurality of reference points are determined for each large obstacle.

8. The computer-implemented method of claim 7, wherein determining a plurality of reference points for each large obstacle comprises:
generating a bounding box which encloses the large obstacle; and
determining the plurality of reference points responsive to where the generated bounding box intersects with an outline of the large obstacle.

9. The computer-implemented method of any one of claims 1 to 8, wherein an obstacle comprises at least one of: a utility pole; a wind turbine; a tree; a building; a road; a ditch; a fence; a stream; a drain cover; a body of water; a seasonal wet spot; crops; and a forest.

10. The computer-implemented method of any one of claims 1 to 9, further comprising obtaining, by the guidance control system, vehicle information, wherein:
the vehicle information identifies a working width of the agricultural vehicle; and
wherein determining an orientation of proposed waylines is responsive to the working width of the agricultural vehicle.

11. The computer-implemented method of any one of claims 1 to 10, wherein the geospatial information comprises at least one of: optical satellite imagery of the predetermined region; near infrared satellite imagery of the predetermined region; a structure map of the predetermined region; shuttle radar topography mission data of the predetermined region; and obstacle data collected during a previous agricultural operation in the predetermined region.

12. The computer-implemented method of any one of claims 1 to 11, wherein processing the geospatial information comprises performing feature analysis of the geospatial information.

13. The computer-implemented method of any one of claims 1 to 12, further comprising controlling an output user interface to provide a visual representation of the recommended route.

14. An agricultural vehicle, comprising:
a guidance control system configured to control one or more operations of the agricultural vehicle and comprising:
at least one processor; and
at least one non-transitory computer-readable storage medium storing instructions thereon that, when executed by the at least one processor, cause the guidance control system to:
obtain boundary information defining the predetermined region;
obtain geospatial information describing physical characteristics of the predetermined region;
identify a plurality of obstacles in the predetermined region by processing the geospatial information;
determine an orientation of proposed waylines for the agricultural vehicle within the predetermined region by processing the identified plurality of obstacles;
generate a recommended route for movement of the agricultural vehicle within the predetermined region responsive to the orientation of proposed waylines and the boundary information; and
during a subsequent performance of an agricultural process by the agricultural vehicle within the region:
monitor, using a position monitoring device, the position of the agricultural vehicle with respect to the recommended route; and
responsive to a deviation of the monitored position of the agricultural vehicle from the recommended route, update the recommended route.

15. The agricultural vehicle of claim 14, further comprising:
an output user interface; and
wherein at least one non-transitory computer-readable storage medium of the guidance control system further comprises instructions that, when executed by the at least one processor, cause the guidance control system guidance control system to provide, on the output user interface, a visual representation of the recommended route.
